# EUROPEAN PATENT APPLICATION

(11) **EP 3 165 708 A1**
(43) Date of publication of application: **10.05.2017**
(21) Application number: 16002344.6
(22) Date of filing: 03.11.2016
(51) Int. Cl.: E21B 33/08, F16J 15/3236

(54) **UNITIZED LIP SEAL FOR WASH PIPE STUFFING BOX SEALING SYSTEM**

(30) Priority: 04.11.2015 US 201514932206
(71) Applicant: Freudenberg Oil & Gas, LLC, Houston TX Texas 77040 (US)
(72) Inventor: Embury, Phillip D., New Haw, Addlestone KT15 3LB (GB)
(74) Representative: Ripper, Monika Sigrid

(57) **Abstract**

A wash pipe stuffing box sealing assembly (10) includes a wash pipe stuffing box (12) with a mandrel sleeve (22) disposed in a bore there through. A plurality of stuffing box adapter rings (24a, 24b, 24c) are disposed in the wash pipe stuffing box (12) and surrounding the mandrel sleeve (22). An annular seal ring (28a, 28b, 28c, 28d) is disposed between a pair of the adapter rings (24a, 24b, 24c), and includes an annular seal body (30) made of a first material including a radially outer portion (32) and an annular radially inner portion (34) extending radially inward from the outer portion (32). The inner portion (34) includes an inner surface (36) with an annular contact lip portion (38) and an annular recess portion (40) disposed adjacent to the annular contact lip portion (38). A secondary sealing ring (42) made of a PTFE (Polytetrafluoroethylene) is disposed in the annular recess portion (40) of the inner portion (34) of the annular seal body (30) and creates additional sealing action from a thermally stable, low friction coefficient material.

## Description

### FIELD

The present disclosure relates to a unitized lip seal for a wash pipe stuffing box sealing system.

### BACKGROUND

This section provides background information related to the present disclosure which is not necessarily prior art.

In the drilling of oil and gas wells, a drill bit is rotated in a borehole by means of a string of drill pipe. The drill pipe can be rotated on the surface mechanically by a rotating table mounted on a drilling platform or by a hydraulic motor, commonly referred to as a top drive. As is common in such oil and gas well drilling, drilling fluid or mud can be circulated through the drill pipe and the drill bit to cool the drill bit and remove the cuttings, which are then recirculated to the surface. The drilling fluid can be at pressures that can range to several thousand psi.

The rotary drilling swivel commonly used in the drilling of oil and gas wells provides rotating support for the drill string suspended from it and a sealed passageway for circulating drilling fluids into the drill string. The drill pipe is in open-flow communication with a wash pipe, through which the drilling fluid flows, the wash pipe usually being stationary. A packing assembly forming part of the swivel rotates with the drill pipe, and is in scaling engagement with the wash pipe to prevent loss of drilling fluid out of the swivel assembly.

Drilling fluid pressures can reach several thousand psi, and at these high pressures, conventional, prior art packing assemblies used to seal between the wash pipe and the rotary head to which the drill pipe is secured have reduced life, resulting in leaking. Pumps employing rotary shafts, e.g., centrifugal pumps, generally employ lip type seals that are generally in a stacked configuration and employ various types of spacers or back-up rings, an adjustable gland being used to force the lips of the seals into engagement with the stuffing box or the like in which the seals are carried and the rotating shaft that extends through the stuffing box. In many cases, these pumps are in environments where change-out of the seal rings is difficult and results in costly downtime.

### SUMMARY

This section provides a general summary of the disclosure, and is not a comprehensive disclosure of its full scope or all of its features.

A wash pipe stuffing box sealing assembly according to the present disclosure includes a wash pipe stuffing box having a bore extending there through. A mandrel sleeve is disposed in the aperture in the wash pipe stuffing box. A plurality of stuffing box adapter rings are disposed in the wash pipe stuffing box and surrounding the mandrel sleeve. A plurality of annular seal rings are dispersed between the plurality of stuffing box adapter rings. The annular seal rings each include an annular seal body made of a first material including a radially outer portion and an annular radially inner portion extending radially inward from the outer portion at an acute angle relative to an axis of the mandrel sleeve. The inner portion includes an inner surface with an annular contact lip portion and an annular recess portion disposed adjacent to the annular contact lip portion. A secondary sealing ring made of a second material different than the first material is disposed in the annular recess portion of the inner portion of the annular seal body.

Finite element analysis has shown the highest contact stress is at the tip of the lip seal so that this point is in contact with the drilling fluid and will run cooler with lubrication and last longer. In addition, the secondary sealing ring is energized against the rotating mandrel sleeve by the differential pressure acting on the lip seal. This will create additional sealing action from a thermally stable, low friction coefficient material. These features extend the life of the annular seal rings as compared to conventional designs.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a cross-sectional view of a wash pipe stuffing box sealing assembly according to the principles of the present disclosure;
Figure 2 is a cross-sectional view of the annular seal body of the seal rings used in the wash pipe stuffing box sealing assembly according to the principles of the present disclosure;
Figure 3 is a cross-sectional view of a seal ring according to the principles of the present disclosure in an un-deformed state;
Figure 4 is a cross-sectional view of a seal ring according to the principles of the present disclosure in an assembled deformed state without operation pressure; and
Figure 5 is a cross-sectional view of a seal ring according to the principles of the present disclosure in an assembled and deformed state under operational pressure.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "bellow" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

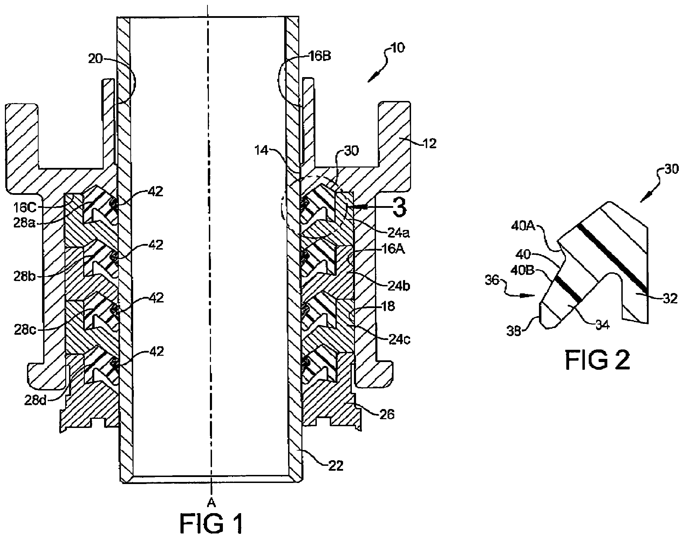

With reference to Figure 1, a wash pipe stuffing box sealing system 10 is shown including a wash pipe stuffing box 12 having a bore 14 extending there through. The bore 14 includes a larger diameter cylindrical portion 16A defined by a cylindrical wall 18 and a smaller diameter cylindrical portion 16B defined by a cylindrical wall 20. A step portion 16C is defined between the larger diameter cylindrical portion 16A and the smaller diameter cylindrical portion 16B. A mandrel sleeve 22 is disposed in and rotates concentrically within the bore 14.

A plurality of stuffing box adapter rings 24a-c are disposed in the large diameter cylindrical portion 16A of the wash pipe stuffing box 12 and surrounding the mandrel sleeve 22. A stuffing box end adaptor 26 is disposed at an end of the larger diameter cylindrical portion 16A of the wash pipe stuffing box 12.

A plurality of an annular seal rings 28a-d are disposed in the larger diameter cylindrical portion 16A of the wash pipe stuffing box 12 with the annular seal ring 28a being disposed between the stepped portion 16C and the adaptor ring 24a. The annular seal ring 28b is disposed between the adaptor ring 24 a and the adaptor ring 24b. The annular seal ring 28c is disposed between the adaptor ring 24b and the adaptor ring 24c. The annular seal ring 28d is disposed between the adaptor ring 24c and the box end adaptor 26.

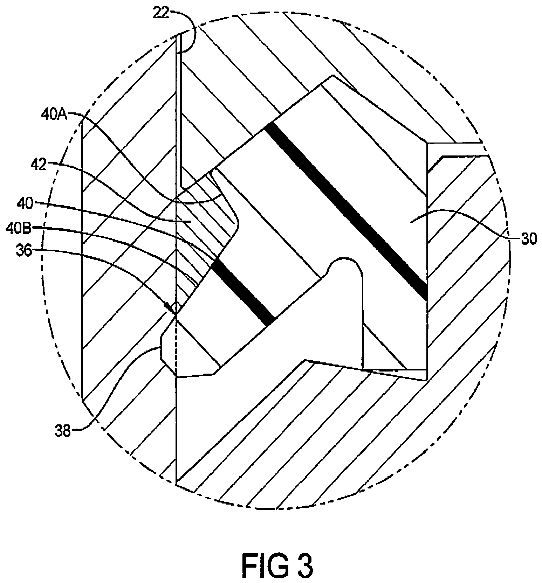

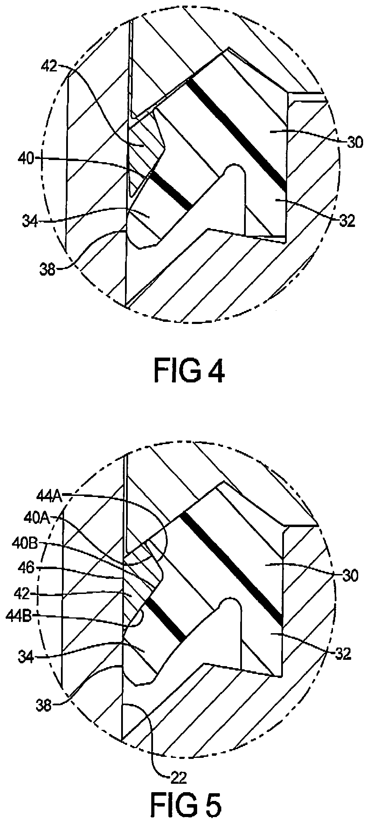

With reference to Figures 1-5, each of the annular seal rings 28a-28d includes an annular seal body 30 made of a rubber material. The rubber material can include at least one of HNBR (Hydrogenated Nitrile elastomer) rubber or FKM (Fluoroelastomer) rubber. In addition, the rubber material can be reinforced with fibers. The annular seal body 30 includes a radially outer portion 32 and an annular radially inner portion 34 extending radially inward from the outer portion 32 at an acute angle relative to an axis of the mandrel sleeve 22. The inner portion 34 includes an inner surface 36 with an annular contact lip portion 38. The annular contact lip portion 38 engages the mandrel sleeve 22. The inner surface 36 also includes an annular recess portion 40 disposed adjacent to the annular contact lip portion 38. The armular recess portion 40 includes a pair of adjacent inward facing surfaces 40A, 40B each disposed at an acute angle to a center axis A of the mandrel sleeve 22. A secondary sealing ring 42 is disposed in the annular recess portion 40 of the inner portion 34 of the annular seal body 30. The secondary sealing ring 42 can be made from PTFE (Polytetrafluoroethylene). The secondary sealing ring 42 can include a pair of adjacent outward facing surfaces 44A, 44B (best shown in Fig.5) that engage the inward facing surfaces 40A, 40B, respectively, of the annular recess portion 40. The secondary sealing ring 42 includes an interior contact surface 46 engaging the mandrel sleeve 22.

With reference to Figure 5, finite element analysis has shown the highest contact stress is at the tip of the lip seal so that this point is in contact with the drilling fluid and will run cooler with lubrication and last longer. In addition, the PTFE (Polytetrafluoroethylene) secondary sealing ring 42 is energized against the rotating mandrel sleeve 22 by the differential pressure acting on the lip seal. This will create additional sealing action from a thermally stable, low friction coefficient material. These features contribute separately to extend the life of the annular seal rings 28a-d.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An annular seal ring, comprising:
an annular seal body (30) made of a first material including a radially outer portion (32) and an annular radially inner portion (34) extending radially inward from the outer portion (32) at an acute angle relative to an axis of symmetry of the annular seal body (30), said inner portion (34) including an inner surface (36) with an annular contact lip portion(38) and an annular recess portion (40) disposed adjacent to the annular contact lip portion (38); and
a secondary sealing ring (42) made of a second material different than said first material and disposed in the annular recess portion (40) of the inner portion (34) of the annular seal body (30).

2. The annular seal ring according to claim 1, wherein said first material includes at least one of HNBR (Hydrogenated Nitrile elastomer) rubber or FKM (Fluoroelastomer) rubber.

3. The annular seal ring according to claim 1, wherein said second material includes PTFE (Polytetrafluoroethylene).

4. The annular seal ring according to claim 1, wherein said annular recess portion (40) includes a pair of adjacent inward facing surfaces (40A, 40B) each disposed at an acute angle to an axis of symmetry of the annular seal body (30).

5. The annular seal ring according to one of the claims 1 to 4, wherein the secondary sealing ring (42) includes a pair of adjacent outward facing surfaces (44A, 44B) that engage the inward facing surfaces (40A, 40B) of said annular recess portion (40).

6. The annular seal ring according to one of the claims 1 to 5, wherein said secondary sealing ring (42) includes an interior contact surface (46).

7. A wash pipe stuffing box sealing assembly (10), comprising:
a wash pipe stuffing box (12) having an aperture extending there through;
a mandrel sleeve (22) disposed in said aperture in said wash pipe stuffing box (10);
a plurality of stuffing box adapter rings (24a, 24b, 24c) disposed in said wash pipe stuffing box (12) and surrounding said mandrel sleeve (22); and
an annular seal ring (28a, 28b, 28c, 28d) disposed between a pair of said plurality of stuffing box adapter rings (24a, 24b, 24c), said annular seal ring (28a, 28b, 28c, 28d) including an annular seal body (30) made of a first material including a radially outer portion (32) and an annular radially inner portion (34) extending radially inward from the outer portion (32) at an acute angle relative to an axis of symmetry of the annular seal body (30), said inner portion (34) including an inner surface (36) with an annular contact lip portion (38) and an annular recess portion (40) disposed adjacent to the annular contact lip portion (38) and a secondary sealing ring (42) made of a second material different than said first material and disposed in the annular recess portion (40) of the inner portion (34) of the annular seal body (30).

8. The wash pipe stuffing box sealing assembly (10) according to claim 7, wherein said first material includes at least one of HNBR (Hydrogenated Nitrile elastomer) rubber or FKM (Fluoroelastomer) rubber.

9. The wash pipe stuffing box sealing assembly (10) according to claim 7, wherein said second material includes PTFE (Polytetrafluoroethylene).

10. The wash pipe stuffing box sealing assembly (10) according to claim 7, wherein said annular recess portion (40) includes a pair of adjacent inward facing surfaces (40A, 40B) each disposed at an acute angle to a center axis of the mandrel sleeve (22).

11. The wash pipe stuffing box sealing assembly (10) according to one of the claims 7 to 10, wherein the secondary sealing ring (42) includes a pair of adjacent outward facing surfaces (44A, 44B) that engage the inward facing surfaces (40A, 40B) of said annular recess portion (40).

12. The wash pipe stuffing box sealing assembly (10) according to one of the claims 7 to 11, wherein said secondary sealing ring (42) includes an interior contact surface (46) engaging said mandrel sleeve (22).
